# EUROPÄISCHE PATENTANMELDUNG

(11) **EP 3 378 727 A1**
(43) Veröffentlichungstag der Anmeldung: **26.09.2018**
(21) Anmeldenummer: 17162741.7
(22) Anmeldetag: 24.03.2017
(51) Int. Cl.: B62B 1/12, B62B 5/02, B62B 5/04

(54) **FALTBARER LASTENTRANSPORTWAGEN**

(71) Anmelder: HILTI Aktiengesellschaft, 9494 Schaan (LI)
(72) Erfinder: KARLSSON, Kenth, 88142 Wasserburg (DE); TULLNEY, Heiko, 21521 Aumühle (DE); PLATE, Thorsten, 22089 Hamburg (DE)
(74) Vertreter: Hilti Aktiengesellschaft Corporate Intellectual Property

(57) **Zusammenfassung**

Lastentransportwagen (1) zum Transportieren von Lasten (WK), vorzugsweise Werkzeugkoffern, umfassend einen Trägerrahmen (10) welcher einen ersten und zweiten Trägerrahmenabschnitt (100, 200) aufweist, wobei sich der erste Trägerrahmenabschnitt (100) in einer ersten Erstreckungsebene (E1) und der zweite Trägerrahmenabschnitt (200) in einer zweiten Erstreckungsebene (E2) erstreckt, wenigstens zwei an der Rückseite (RS) des ersten Trägerrahmenabschnitts (100) angeordnete Räder (300) zum Verfahren des Lastentransportwagens (1), und wenigstens eine erste klappbare Ablage (112), welche an der Vorderseite (VS) des ersten Trägerrahmenabschnitts (100) angeordnet ist, wobei der Lastentransportwagen (1) ferner wenigstens eine zweite klappbare Ablage (208) umfasst, welche an der Vorderseite (VS) des zweiten Trägerrahmenabschnitts (200) angeordnet ist, wobei der zweite Trägerrahmenabschnitt (200) relativ zum ersten Trägerrahmenabschnitt (100) zwischen einer zusammengefalteten Position und einer auseinandergefalteten Position um eine im Wesentlichen horizontal verlaufende, zwischen dem ersten und zweiten Trägerrahmenabschnitt (100, 200) angeordnete Trägerrahmenschwenkachse (X) schwenkbar ist.

## Beschreibung

Die vorliegende Erfindung betrifft einen Lastentransportwagen zum Transportieren von Lasten, vorzugsweise Werkzeugkoffern. Der Lastentransportwagen umfasst einen Trägerrahmen mit einer Vorderseite und einer Rückseite, welcher einen ersten und zweiten Trägerrahmenabschnitt aufweist. Dabei erstrecken sich der erste Trägerrahmenabschnitt in einer ersten Erstreckungsebene und der zweite Trägerrahmenabschnitt in einer zweiten Erstreckungsebene. An der Rückseite des ersten Trägerrahmenabschnitts sind wenigstens zwei Räder zum Verfahren des Lastentransportwagens angeordnet. an der Vorderseite des ersten Trägerrahmenabschnitts ist wenigstens eine erste Ablage angeordnet.

Lastentransportwagen der eingangs genannten Art sind beispielsweise in Form von Sackkarren grundsätzlich aus dem Stand der Technik bekannt.

Es ist die Aufgabe der vorliegenden Erfindung, einen Lastentransportwagen der eingangs genannten Art bereitzustellen, welcher vielfältig einsetzbar, einfach handhabbar und platzsparend verstaubar ist.

Diese Aufgabe wird bei einem Lastentransportwagen der eingangs genannten Art dadurch gelöst, dass der Lastentransportwagen ferner wenigstens eine zweite Ablage umfasst, welche an der Vorderseite des zweiten Trägerrahmenabschnitts angeordnet ist. Zudem ist der zweite Trägerrahmenabschnitt relativ zum ersten Trägerrahmenabschnitt zwischen einer zusammengefalteten Position und einer auseinandergefalteten Position um eine im Wesentlichen horizontal verlaufende, zwischen dem ersten und zweiten Trägerrahmenabschnitt angeordnete Trägerrahmenschwenkachse schwenkbar. Der zweite Trägerrahmenabschnitt liegt in seiner auseinandergefalteten Position in Schwerkraftrichtung oberhalb des ersten Trägerrahmenabschnitts. In der zusammengefalteten Position des zweiten Trägerrahmenabschnitts ist die zweite Erstreckungsebene des zweiten Trägerrahmenabschnitts im Wesentlichen parallel zur ersten Erstreckungsebene des ersten Trägerrahmenabschnitts und die Rückseite des zweiten Trägerrahmenabschnitts gegenüber der Rückseite des ersten Trägerrahmenabschnitts angeordnet. Die erste und zweite Ablage sind zwischen einer eingeklappten Position und einer ausgeklappten Position schwenkbar. In ihrer ausgeklappten Position sind die erste und zweite Ablage dazu vorgesehen, auf ihren nach oben weisenden Seiten zu transportierende Lasten aufzunehmen. In ihrer eingeklappten Position ist die erste Ablage im Wesentlichen parallel zur ersten Erstreckungsebene des ersten Trägerrahmenabschnitts und die zweite Ablage im Wesentlichen parallel zur zweiten Erstreckungsebene des zweiten Trägerrahmenabschnitts angeordnet.

Die vorliegende Erfindung schließt die Erkenntnis ein, dass beispielsweise auf Baustellen verschiedenste Werkzeuge und Geräte zum Einsatz kommen, welche an unterschiedlichen Einsatzgebieten benötigt werden und so von einem Einsatzgebiet zu einem anderen Einsatzgebiet transportiert werden müssen. Gewöhnliche Sackkarren eignen sich zwar zum Transportieren von Lasten, sind aber sperrig und lassen sich gerade in unwegsamem Gelände, wie etwa auf Baustellen, schlecht transportieren.

Der erfindungsgemäße Lastentransportwagen lässt sich von seinem auseinandergefalteten Gebrauchszustand auf eine kompakte Größe zusammenfalten. Die schwenkbare Anordnung der ersten und zweiten Trägerrahmenabschnitte ermöglicht, die gesamte Länge des Trägerrahmens zum Anbringen von Ablagen zu nutzen. Im zusammengefalteten Zustand lässt sich der Lastentransportwagen von einer Bedienperson wie ein Werkzeugkoffer tragen. Genauso ist es möglich, den zusammengefalteten Lastentransportwagen wie einen Rucksack auf dem Rücken zu tragen.

Der erste Trägerrahmenabschnitt kann an seiner Vorderseite eine weitere, dritte Ablage aufweisen, welche in Schwerkraftrichtung unterhalb der ersten Ablage angeordnet ist. Vorzugsweise ist wie die erste und zweite Ablage auch die dritte Ablage zwischen einer eingeklappten Position und einer ausgeklappten Position schwenkbar. Die dritte Ablage kann relativ zur ersten Ablage in ihrer eingeklappten Position insbesondere derart angeordnet sein, dass die dritte Ablage an der ersten Ablage wenigstens teilweise anliegt. Mit anderen Worten können sich die erste und dritte Ablage in ihrer eingeklappten Position in Schwerkraftrichtung überlappen. Auf diese Weise wird durch das Anbringen einer weiteren, dritten Ablage weiterhin gewährleistet, dass sich der Lastentransportwagen auf eine kompakte Größe zusammenfalten lässt.

Aus diesem Grund ist es auch vorteilhaft, wenn eine an dem ersten oder zweiten Trägerrahmenabschnitt angeordnete Ablage in ihrer eingeklappten Position im Wesentlichen nicht über den ersten bzw. zweiten Trägerrahmenabschnitt hervorsteht. Beispielsweise können die Ablagen derart am Trägerrahmen angeordnet sein, dass sie um nicht mehr als 10% der Länge des entsprechenden ersten oder zweiten Trägerrahmenabschnitts (gemessen in deren Längsrichtung) hervorstehen.

Es ist weiter von Vorteil, wenn die Ablagen des Trägerrahmens nach oben, d.h. entgegen der Schwerkraftrichtung, von der ausgeklappten Position in die eingeklappte Position schwenkbar sind. Dann liegen die in der ausgeklappten Position nach oben weisenden Seiten der Ablagen (welche als Ablageflächen dienen) in der eingeklappten Position der Ablagen der Vorderseite des Trägerrahmens gegenüber. Dies kann die Konstruktion der Lagerung der Ablagen im Vergleich zur Schwenkbarkeit nach unten, also in Schwerkraftrichtung, vereinfachen.

In einer bevorzugten Ausführungsform weist der zweite Trägerrahmenabschnitt in seiner auseinandergefalteten Position an seinem in Schwerkraftrichtung oberen Ende eine vierte Ablage auf. Auch die vierte Ablage kann zwischen einer eingeklappten Position und einer ausgeklappten Position schwenkbar sein. Um den Lastentransportwagen kompakt zusammenfalten zu können, befindet sich die vierte Ablage in ihrem eingeklappten Zustand auf der Rückseite des zweiten Trägerrahmenabschnitts. Soll die vierte Ablage ausgeklappt werden, wird sie auf die Vorderseite des Trägerrahmens verschwenkt. Der überstrichene Schwenkwinkel ist dabei größer als 180°.

Der Lastentransportwagen lässt sich besonders flexibel einsetzen, wenn seine Ablagen unabhängig voneinander zwischen einer eingeklappten Position und einer ausgeklappten Position schwenkbar sind. Im auseinandergefalteten Zustand des Lastentransportwagens kann so bei einer großen, viel Platz einnehmenden Last nur eine untere Ablage ausgeklappt werden, wohingegen die anderen Ablagen eingeklappt bleiben. Im Fall mehrerer kleinerer Lasten können hingegen alle Ablagen ausgeklappt und zum Ablegen der Lasten genutzt werden.

Die Ablagen können beispielsweise plattenförmig mit einer ebenen Auflagefläche zum Ablegen einer Last ausgestaltet sein. Dies ist besonders für die erste, zweite und dritte Ablage vorteilhaft. Insbesondere bei der obersten Ablage des Trägerrahmens, also der vierten Ablage, hat es sich gezeigt, dass eine Ausgestaltung mit Stützrahmen zum Einhängen einer Last günstig ist.

Allgemein ist es zum Verringern der zusammengefalteten Größe des Lastentransportwagens zweckmäßig, wenn die am Trägerrahmen angeordneten Ablagen Ebenen definieren (wie die ersten und zweiten Trägerrahmenabschnitte), so dass sie möglichst flach aufeinandergelegt bzw. gestapelt werden können.

Die Räder des Lastentransportwagens können jeweils an einer Radaufhängung derart gelagert sein, dass sie jeweils um eine Radachse drehbar sind. Bevorzugt sind die Radaufhängungen jeweils um eine senkrecht zur Trägerrahmenschwenkachse angeordnete Radaufhängungsschwenkachse zwischen einer eingeklappten Position und einer ausgeklappten Position schwenkbar. Um ein kompaktes Zusammenfalten des Lastentransportwagens zu gewährleisten, ist es bevorzugt, dass die Radachsen der Räder in der eingeklappten Position der Radaufhängungen jeweils senkrecht zur ersten Erstreckungsebene des ersten Trägerrahmenabschnitts und in der ausgeklappten Position der Radaufhängungen parallel zur ersten Erstreckungsebene des ersten Trägerrahmenabschnitts angeordnet sind. Auch die Radaufhängungen sollten in diesem Fall möglichst kompakt konstruiert sein, um die Breite des zusammengefalteten Lastentransportwagens (gemessen senkrecht zur ersten Erstreckungsebene des ersten Trägerrahmenabschnitts) gering zu halten.

Die Radaufhängungen umfassen bevorzugt jeweils eine Gleitschiene. Die Gleitschienen sollen das Überwinden von Treppenstufen oder anderen Hindernissen erleichtern. Dazu können die Gleitschienen in einem Abstand zum ersten Trägerrahmenabschnitt und im Wesentlichen parallel zur Längsrichtung des ersten Trägerrahmenabschnitts verlaufen. Der Abstand zwischen einer Gleitschiene und dem ersten Trägerrahmenabschnitt kann in etwa der Entfernung eines vom ersten Trägerrahmenabschnitt am weitesten entfernten Punktes auf dem Reifen eines der Räder und dem ersten Trägerrahmenabschnitt entsprechen. Der besagte Abstand kann aber auch etwas kleiner sein als diese Entfernung und mindestens etwa 80 % derselben betragen.

Wieder ist es besonders vorteilhaft, wenn die Gleitschienen zusammen mit den Radaufhängungen zwischen der eingeklappten Position und der ausgeklappten Position der Radaufhängungen um die Radaufhängungsschwenkachse schwenkbar sind.

Gemäß einer weiteren bevorzugten Ausführungsform weisen die Räder jeweils einen elastischen Reifen und eine Mehrzahl von Speichen auf, wobei die Speichen dazu ausgebildet sind, eine Verformung des Reifens abzufedern. Mit anderen Worten können die Speichen so geformt sein, dass sie eine nachgiebige Abstützung des Reifens liefern. In diesem Fall kann der Reifen nicht-aufblasbar bzw. nicht-pneumatisch sein, denn das Abfedern übernehmen die Speichen. Diese Ausgestaltung der Räder ist vorteilhaft, weil ein mühseliges und zeitraubendes Aufblasen der Reifen entfällt. Der Lastentransportwagen ist stets sofort einsatzbereit. Die Räder sind vorzugsweise relativ groß, weil große Räder im Vergleich zu kleinen Rädern ein Verfahren des Lastentransportwagens erleichtern. Beispielsweise können die Räder einen Durchmesser von 200 mm und eine Breite (gemessen in Richtung der Radachse) von 60 mm haben.

Um das Tragen des zusammengefalteten Lastentransportwagens zu erleichtern, kann an der in der ausgeklappten Position in Schwerkraftrichtung nach unten weisenden Seite der ersten Ablage eine Griffanordnung derart angeordnet sein, dass der Lastentransportwagen im zusammengefalteten Zustand von einer Bedienperson an der Griffanordnung tragbar ist. Zum besseren Ergreifen der Griffanordnung kann diese hintergreifbar ausgestaltet sein. Der zusammengefaltete Lastentransportwagen kann dann wie ein Koffer von der Bedienperson bequem getragen werden.

Wenn ein oder mehrere Werkzeugkoffer auf dem Lastentransportwagen verstaut werden sollen, ist es vorteilhaft, wenn diese mit Gurten auf den Ablagen gesichert werden können. Dazu kann der Trägerrahmen erste Kopplungsmittel aufweisen, welche mit ersten Gegenkopplungsmitteln eines am Lastentransportwagen anzubringenden Gurtes koppelbar sind. Zudem können die Ablagen zweite Kopplungsmittel aufweisen, welche mit zweiten Gegenkopplungsmitteln eines an dem Lastentransportwagen angeordneten Gurtes koppelbar sind. Bezüglich der eingeklappten Positionen der Ablagen befinden sich die zweiten Kopplungsmittel vorzugsweise an den in Schwerkraftrichtung oberen Enden der Ablagen, insbesondere der ersten, zweiten oder dritten Ablage.

Die vorliegende Erfindung betrifft außerdem die Verwendung des oben beschriebenen faltbaren Lastentransportwagens als Regalsystem. Dazu ist vorgesehen, den Lastentransportwagen mittels wenigstens einer an einer Wand angeordneten verstellbaren Befestigungseinrichtung an der Wand zu befestigen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: einen erfindungsgemäßen Lastentransportwagen im auseinandergefalteten Gebrauchszustand in einer perspektivischen Vorderansicht von schräg unten,
- Fig. 2: einen erfindungsgemäßen Lastentransportwagen im auseinandergefalteten Zustand in einer frontalen Seitenansicht,
- Fig. 3: einen erfindungsgemäßen Lastentransportwagen im zusammengefalteten Gebrauchszustand in einer perspektivischen Seitenansicht von schräg oben,
- Fig. 4A-4E: einen beispielhaften Vorgang des Zusammenfaltens eines erfindungsgemäßen Lastentransportwagens vom auseinandergefalteten Gebrauchszustand in den zusammengefalteten Zustand,
- Fig. 5: einen voll beladenen erfindungsgemäßen Lastentransportwagen im auseinandergefalteten Gebrauchszustand in einer perspektivischen Vorderansicht von schräg unten,
- Fig. 6: einen mit einem Werkzeugkoffer beladenen erfindungsgemäßen Lastentransportwagen im auseinandergefalteten Gebrauchszustand in einer perspektivischen Vorderansicht von schräg oben,
- Fig. 7: einen erfindungsgemäßen Lastentransportwagen im auseinandergefalteten Gebrauchszustand in einer perspektivischen Rückansicht von schräg oben,

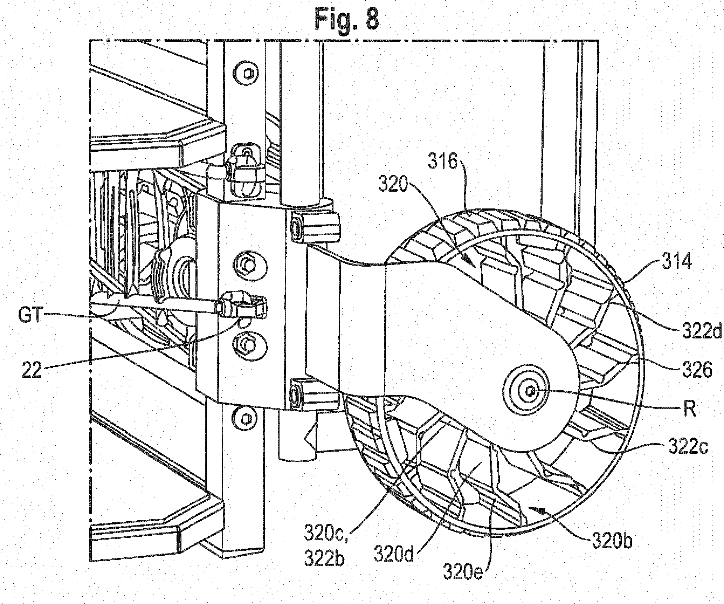

- Fig. 8: ein Rad eines erfindungsgemäßen Lastentransportwagens, und
- Fig. 9A-9B: den erfindungsgemäßen Lastentransportwagen in einem von einer Befestigungseinrichtung beabstandeten Zustand und einem in die Befestigungseinrichtung eingehängten Zustand zum Verwenden des erfindungsgemäßen Lastentransportwagens als Regalsystem.

### Ausführungsbeispiel:

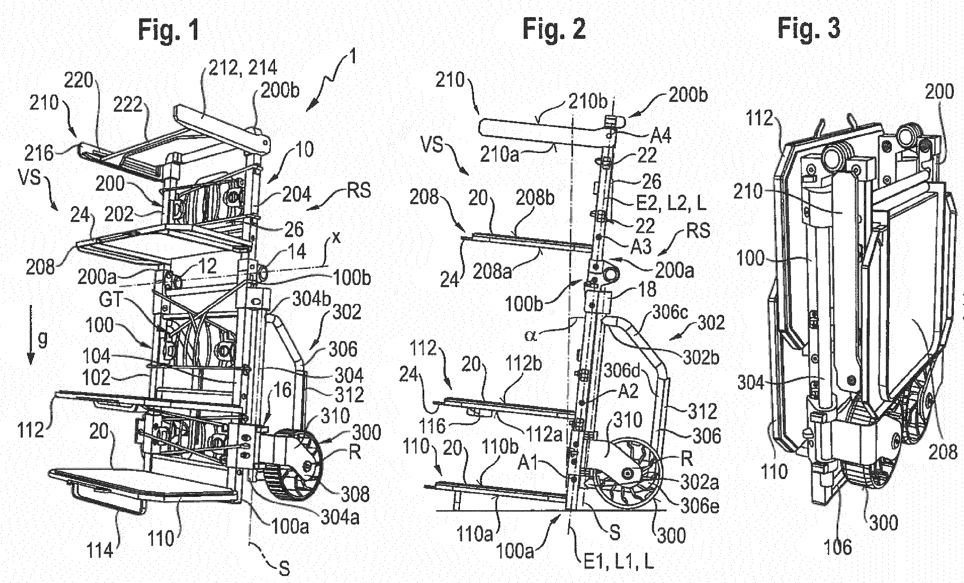

Ein bevorzugtes Ausführungsbeispiel eines faltbaren Lastentransportwagens 1 ist in den Fig. 1 bis 3 dargestellt. Fig.1 1 und 2 zeigen den Lastentransportwagen 1 in seinem auseinandergefalteten, aus einer vertikalen Lage leicht gekippten Gebrauchszustand, während Fig. 3 den zusammengefalteten Zustand des Lastentransportwagens 1 zeigt. Nachfolgend beziehen sich die Richtungsangaben "oben", "oberhalb", "unten" und "unterhalb" auf die Schwerkraftrichtung g.

Der Lastentransportwagen 1 umfasst einen Trägerrahmen 10. Der Trägerrahmen 10 umfasst wiederum einen sich in einer ersten Erstreckungsebene E1 erstreckenden ersten Trägerrahmenabschnitt 100 und einen sich in einer zweiten Erstreckungsebene E2 erstreckenden zweiten Trägerrahmenabschnitt 200. Zudem erstrecken sich der erste Trägerrahmenabschnitt 100 entlang einer ersten Längsrichtung L1 und der zweite Trägerrahmenabschnitt 200 entlang einer zweiten Längsrichtung L2. Der erste Trägerrahmenabschnitt 100 weist ein unteres Ende 100a und ein oberes Ende 100b auf. Ebenso weist der zweite Trägerrahmenabschnitt 200 ein unteres Ende 200a und ein oberes Ende 200b auf.

Der auseinandergefaltete Gebrauchszustand des Lastentransportwagens 1 definiert im Folgenden eine Vorderseite VS und eine Rückseite RS des Trägerrahmens 10 bzw. seiner ersten und zweiten Trägerrahmenabschnitte 100, 200.

An der Rückseite RS des ersten Trägerrahmenabschnitts 100 befinden sich zwei Räder 300, welche zum Verfahren des Lastentransportwagens 1 dienen. Die Ausgestaltung der Räder 300 des Lastentransportwagens 1 wird untenstehend noch detailliert beschrieben.

Wie aus den Fig. 1 bis 3 ersichtlich, weist der erste Trägerrahmenabschnitt 100 zwei parallel verlaufende Längsstreben 102, 104 auf, welche von einer unteren Querstrebe 106 am unteren Ende 100a des ersten Trägerrahmenabschnitts 100 und einer oberen Querstrebe 108 am oberen Ende 100b des ersten Trägerrahmenabschnitts 100 miteinander verbunden sind. Auf ähnliche Weise weist der zweite Trägerrahmenabschnitt 100 zwei parallel verlaufende Längsstreben 202, 204 auf, welche von einer oberen Querstrebe 206 am oberen Ende 200b des zweiten Trägerrahmenabschnitts 200 miteinander verbunden sind.

Die erste Längsstrebe 102 des ersten Trägerrahmenabschnitts 100 ist durch eine erste Gelenkverbindung 12 mit der ersten Längsstrebe 202 des zweiten Trägerrahmenabschnitts 200 gelenkig verbunden. Auf entsprechende Weise ist die zweite Längsstrebe 104 des ersten Trägerrahmenabschnitts 100 durch eine zweite Gelenkverbindung 14 mit der zweiten Längsstrebe 202 des zweiten Trägerrahmenabschnitts 200 gelenkig verbunden. Mit anderen Worten: Das untere Ende 200a des zweiten Trägerrahmenabschnitts 200 ist durch die zwei Gelenkverbindungen 12, 14 mit dem oberen Ende 100b des ersten Trägerrahmenabschnitts 100 gekoppelt. Im auseinandergefalteten Gebrauchszustand des Lastentransportwagens 1 definieren die Gelenkverbindungen 12, 14 eine im Wesentlichen horizontal verlaufende Trägerrahmenschwenkachse X zwischen erstem und zweitem Trägerrahmenabschnitt 100, 200. Auf diese Weise ist der zweite Trägerrahmenabschnitt 200 relativ zum ersten Trägerrahmenabschnitt 100 zwischen einer zusammengefalteten Position (Fig. 3) und einer auseinandergefalteten Position (Fig. 1 und 2) um die Trägerrahmenschwenkachse X schwenkbar.

Wie in den Fig. 1 und 2 zu sehen, liegt der zweite Trägerrahmenabschnitt 200 in seiner auseinandergefalteten Position oberhalb des ersten Trägerrahmenabschnitts 100. Die erste und zweite Erstreckungsebene E1, E2 des ersten bzw. zweiten Trägerrahmenabschnitts 100, 200 sind dabei im Wesentlichen parallel zueinander. Im auseinandergefalteten Gebrauchszustand des Lastentransportwagens 1 ist der zweite Trägerrahmenabschnitts 200 in seiner auseinandergefalteten Position. Zudem erstrecken sich im auseinandergefalteten Gebrauchszustand des Lastentransportwagens 1 der erste und zweite Trägerrahmenabschnitt 100, 200 bevorzugt entlang einer gemeinsamen Längsrichtung L, so dass die erste und zweite Längsrichtung L1, L2 zueinander koaxial sind.

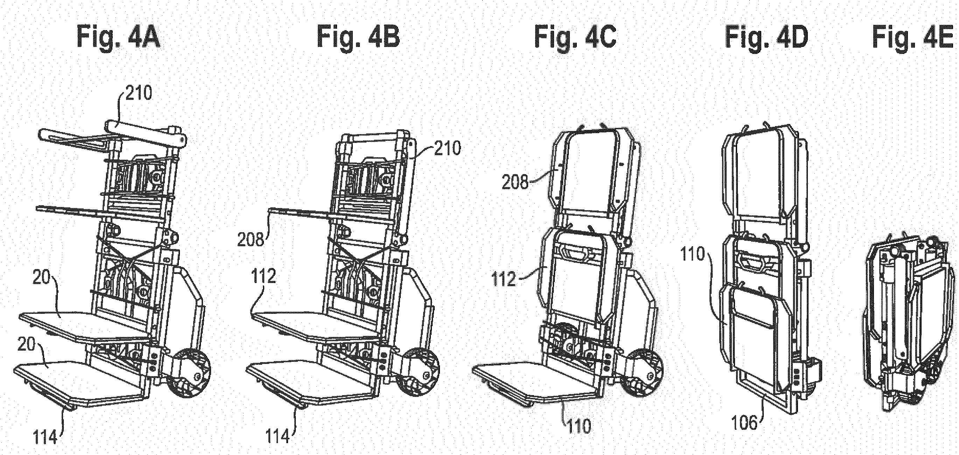

An der Vorderseite VS des ersten Trägerrahmenabschnitts 100 sind zwei Ablagen 110, 112 angeordnet. Die untere Ablage 110 des ersten Trägerrahmenabschnitts 100 ist nahe dem unteren Ende 100a des ersten Trägerrahmenabschnitts 100 und unterhalb der oberen Ablage 112 des ersten Trägerrahmenabschnitts 100 angeordnet. Die untere Ablage 110 ist um eine Schwenkachse A1 und die obere Ablage 112 ist um eine Schwenkachse A2 zwischen einer eingeklappten Position und einer ausgeklappten Position schwenkbar (Fig. 4A bis 4E).

Neben den beiden Ablagen 110, 112 des ersten Trägerrahmenabschnitts 100 weist auch der zweite Trägerrahmenabschnitt 200 an seiner Vorderseite VS zwei Ablagen 208, 210 auf. Die obere Ablage 210 des zweiten Trägerrahmenabschnitts 200 ist nahe dem oberen Ende 200b des zweiten Trägerrahmenabschnitts 200 und oberhalb der unteren Ablage 208 des zweiten Trägerrahmenabschnitts 200 angeordnet. Die untere Ablage 208 ist um eine Schwenkachse A3 und die obere Ablage 210 ist um eine Schwenkachse A4 zwischen einer eingeklappten Position und einer ausgeklappten Position schwenkbar (Fig. 4A bis 4E).

In den Fig. 1 und 2 sind die Ablagen 110, 112, 208, 210 in ihrer ausgeklappten Position senkrecht zur ersten und zweiten Erstreckungsebene E1, E2 des ersten bzw. zweiten Trägerrahmenabschnitts 100, 200 dargestellt. In ihrer ausgeklappten Position definieren die Ablagen 110, 112, 208, 210 des Trägerrahmens 10 bzw. des ersten und zweiten Trägerrahmenabschnitts 100, 200 jeweils eine nach unten weisende Unterseite 110a, 112a, 208a, 210a und eine nach oben weisende Oberseite 110b, 112b, 208b, 210b.

Um die beiden Ablagen 110, 112 des ersten Trägerrahmenabschnitts 100 und die untere Ablage 208 des zweiten Trägerrahmenabschnitts 200 aus ihrer ausgeklappten Position in die eingeklappte Position zu überführen, werden die Ablagen 110, 112, 208 jeweils nach oben, d.h. gegen die Schwerkraftrichtung g (im dargestellten Ausführungsbeispiel im Uhrzeigersinn), um eine der jeweiligen Ablage 110, 112, 208 zugeordnete Schwenkachse A1, A2, A3 verschwenkt. Um die beiden Ablagen 110, 112 des ersten Trägerrahmenabschnitts 100 und die untere Ablage 208 des zweiten Trägerrahmenabschnitts 200 in der jeweiligen eingeklappten Position sicher zu halten, sind Verriegelungsmittel vorgesehen. Die Schwenkbewegungen der Ablagen 110, 112, 208, 210 des Trägerrahmens 10 werden unten mit Bezug auf die Fig. 4A bis 4E näher erläutert.

Der Lastentransportwagen 1 umfasst ferner zwei Radaufhängungen 302, welche im Wesentlichen identisch zueinander aufgebaut sind. Im Folgenden wird deshalb nur auf die Konstruktion einer der Radaufhängungen 302 eingegangen.

Die Radaufhängung 302 umfasst eine sich in Längsrichtung L1 des ersten Trägerrahmenabschnitts 100 erstreckende erste Stange 304, welche ein oberes Ende 304b und ein unteres Ende 304a aufweist. Die erste Stange 304 ist nahe ihrem unteren Ende 304a in einem ersten Drehlager 16 gelagert. Das obere Ende 304b der Stange 304 ist in einem zweiten Drehlager 18 gelagert. Durch diese Anordnung wird eine sich entlang der Stange 304 erstreckende Radaufhängungsschwenkachse S definiert, um welche die Radaufhängung 302 schwenkbar ist.

Die Radaufhängungsschwenkachsen S der beiden Radaufhängungen 302 sind parallel zueinander und senkrecht zur Trägerrahmenschwenkachse X bzw. Längsrichtung L1 des ersten Trägerrahmenabschnitts 100. Durch die schwenkbare Lagerung der beiden Radaufhängungen 302 sind diese samt der Räder 300 unabhängig voneinander zwischen einer eingeklappten Position und einer ausgeklappten Position schwenkbar.

An der ersten Stange 304 der Radaufhängung 302 ist eine zweite Stange 306 angeformt. Genauer gesagt ist die zweite Stange 306 an ihrem oberen Ende 306b mit dem oberen Ende 304b der ersten Stange 304 und an ihrem unteren Ende 306a mit dem unteren Ende 304a der ersten Stange 304 integral verbunden. Die erste und zweite Stange 304, 306 liegen in einer gemeinsamen Erstreckungsebene. In der eingeklappten Position der Radaufhängungen 302 verläuft die von der ersten und zweiten Stange 304, 306 aufgespannte Erstreckungsebene parallel zur Erstreckungsebene E1 des ersten Trägerrahmenabschnitts 100 (Fig. 3).

Die zweite Stange 306 weist einen oberen Stangenabschnitt 306c, einen mittleren Stangenabschnitt 306d und einen unteren Stangenabschnitt 306e auf. Der obere Stangenabschnitt 306c kann beispielsweise als Griff für eine Bedienperson des Lastentransportwagens 1 dienen.

Der mittlere Stangenabschnitt 306d verläuft in einem Abstand parallel zur ersten Stange 304. Im dargestellten Ausführungsbeispiel ist an der von der Rückseite RS des ersten Trägerrahmenabschnitts 100 wegweisenden Seite des mittleren Stangenabschnitts 306d eine Gleitschiene 312 angebracht. Die zweite Stange 306 und die daran vorgesehene Gleitschiene 312 ermöglichen ein vereinfachtes Überwinden von Stufen oder anderen Hindernissen im Vergleich zu dem Fall, dass eine solche Konstruktion nicht vorhanden ist.

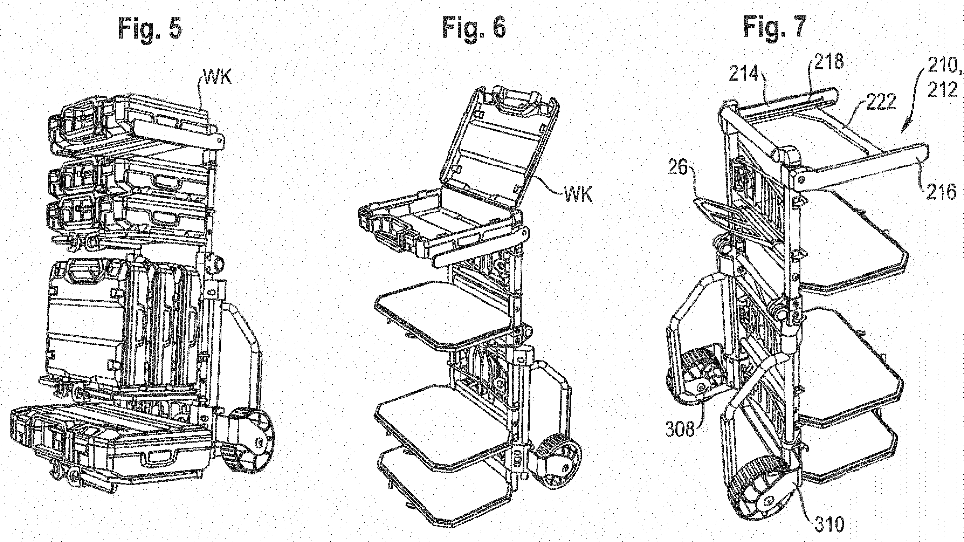

Der untere Stangenabschnitt 306e der zweiten Stange 306 ist mit einem ersten Stützarm 308 (Fig. 7) und der untere Stangenabschnitt der ersten Stange 304 ist mit einem zweiten Stützarm 310 integral verbunden. Zwischen dem ersten und zweiten Stützarm 308, 310 ist das Rad 300 der Radaufhängung 302 derart gelagert, dass das Rad 300 um eine Radachse R drehbar ist.

Die Radachsen R sind in der eingeklappten Position der Radaufhängungen 302 senkrecht zur ersten Erstreckungsebene E1, E2 des ersten Trägerrahmenabschnitts 100 und in der ausgeklappten Position der Radaufhängungen 302 parallel zur ersten Erstreckungsebene E1 des ersten Trägerrahmenabschnitts 100 angeordnet ist. Die beiden Radachsen R sind in der ausgeklappten Position der Radaufhängungen 302 koaxial zueinander.

Der Vorgang des Zusammenfaltens eines erfindungsgemäßen Lastentransportwagens 1 soll nun anhand der Fig. 4A bis 4E beschrieben werden.

Der in Fig. 4A dargestellte Lastentransportwagen 1 entspricht im Wesentlichen demjenigen der Fig. 1 und 2. Der Lastentransportwagen 1 der Fig. 4A befindet sich im auseinandergefalteten Gebrauchszustand, wobei alle seine Ablagen 110, 112, 208, 210 ausgeklappt sind, sich also in ihrer ausgeklappten Position befinden.

In dem in den Fig. 2 und 4A dargestellten auseinandergefalteten Gebrauchszustand des Lastentransportwagens 1 verlaufen die Längsrichtungen L1, L2 der ersten und zweiten Trägerrahmenabschnitte im Wesentlichen parallel zueinander und annähernd parallel zur Schwerkraftrichtung g. Die Abweichung von der vertikalen Ausrichtung des Lastentransportwagens 1 ist bedingt durch eine an der Unterseite 110a der unteren Ablage 110 des ersten Trägerrahmenabschnitts 100 angeordnete längliche Stützvorrichtung 114. Wie in den Fig. 2 und 4A zu erkennen, stützt sich der Lastentransportwagen 1 auf der Stützvorrichtung 114 sowie der unteren Querstange 106 und den unteren Enden der ersten und zweiten Längsstreben 102, 104 des ersten Trägerrahmenabschnitts 100 ab. Die Längsrichtungen L1, L2 schließen mit der Schwerkraftrichtung g einen Neigungswinkel α von etwa 6° ein. Im Gebrauch kann der Lastentransportwagen 1 aus diesem auseinandergefalteten Gebrauchszustand der Fig. 2 und 4A durch Abstützung auf den Rädern 300 verkippt werden, so dass sich der Neigungswinkel α von etwa 6° auf einen höheren Wert vergrößert. In den Fig. 2 und 4A berühren die Räder 300 den Boden nicht, sondern schweben in geringem Abstand oberhalb des Bodens. Die schwebende Anordnung der Räder 300 vereinfacht ein Verkippen des Lastentransportwagens 1 aus dem auseinandergefalteten Gebrauchszustand. Zum Kippen kann auch die unter Querstrebe 106 verwendet werden.

In Fig. 4B wurde die obere Ablage 210 des zweiten Trägerrahmenabschnitts 200 aus ihrer ausgeklappten Position in ihre eingeklappte Position verschwenkt. Der bei dieser Schwenkbewegung überstrichene Schwenkwinkel ist größer als 180°. Da in Fig. 4B die obere Ablage 210 des zweiten Trägerrahmenabschnitts 200 in der ausgeklappten Position im Wesentlichen senkrecht zur Erstreckungsebene E2 des zweiten Trägerrahmenabschnitts 200 ist, beträgt der von der oberen Ablage 210 zwischen den Darstellungen der Fig. 4A und 4B ausgeführte Schwenkwinkel im Wesentlichen 270°. Die obere Ablage 210 befindet sich in Fig. 4B auf der Rückseite RS des zweiten Trägerrahmenabschnitts 200.

In Fig. 4C wurden die untere Ablage 208 des zweiten Trägerrahmenabschnitts 200 und die obere Ablage 112 des ersten Trägerrahmenabschnitts 100 von der ausgeklappten Position in die eingeklappte Position bewegt. Der bei dieser nach oben gerichteten Schwenkbewegung überstrichene Schwenkwinkel beträgt im Wesentlichen 90°. In der eingeklappten Position kommen die Oberseite 112b der oberen Ablage 112 des ersten Trägerrahmenabschnitts 100 und die Oberseite 208b der unteren Ablage 208 des zweiten Trägerrahmenabschnitts 200 an der Vorderseite VS des Trägerrahmens 10 wenigstens teilweise zum Anliegen. Die obere Ablage 112 des ersten Trägerrahmenabschnitts 100 und die untere Ablage 208 des zweiten Trägerrahmenabschnitts 200 überlappen einander in ihren eingeklappten Positionen nicht.

In Fig. 4D wurde auch die untere Ablage 110 des ersten Trägerrahmenabschnitts 100 von ihrer ausgeklappten Position in ihre eingeklappte Position überführt. Wie bei der unteren Ablage 208 des zweiten Trägerrahmenabschnitts 200 und der oberen Ablage 112 des ersten Trägerrahmenabschnitts 100 wurde die untere Ablage 110 des ersten Trägerrahmenabschnitts 100 bei dieser Schwenkbewegung um einen Schwenkwinkel von im Wesentlichen 90° nach oben geklappt. Die Oberseite 110b der unteren Ablage 110 des ersten Trägerrahmenabschnitts 100 liegt in ihrer eingeklappten Position an der Unterseite 112a der oberen Ablage 112 des ersten Trägerrahmenabschnitts 100 an, zumindest insoweit die untere und obere Ablage 110, 112 des ersten Trägerrahmenabschnitts 100 einander in Längsrichtung L1 des ersten Trägerrahmenabschnitts 100 überlappen. Befinden sich die Ablagen 110, 112, 208, 210 in ihren eingeklappten Positionen, wie sie in Fig. 4D dargestellt sind, sind sie im Wesentlichen parallel zur ersten und zweiten Erstreckungsebene E1, E2 des ersten bzw. zweiten Trägerrahmenabschnitts 100, 200.

Außerdem wurden in Fig. 4D die beiden Radaufhängungen 302 um ihre jeweilige Radaufhängungsschwenkachse S aus der ausgeklappten Position in die eingeklappte Position verschwenkt.

Fig. 4E zeigt den zusammengefalteten Zustand des Lastentransportwagens 1. Um von der Anordnung der Fig. 4D zur Anordnung der Fig. 4E zu gelangen, wird der zweite Trägerrahmenabschnitt 200 um die Trägerrahmenschwenkachse X relativ zum ersten Trägerrahmenabschnitt 100 nach unten verschwenkt. Der Schwenkwinkel beträgt bei dieser Schwenkbewegung im Wesentlichen 180°.

Wie aus Fig. 4E ersichtlich, liegt in der zusammengefalteten Position des zweiten Trägerrahmenabschnitts 200 die Rückseite RS des zweiten Trägerrahmenabschnitts 200 der Rückseite RS des ersten Trägerrahmenabschnitts 100 gegenüber, so dass die zweite Erstreckungsebene E2 des zweiten Trägerrahmenabschnitts 200 im Wesentlichen parallel zur ersten Erstreckungsebene E1 des ersten Trägerrahmenabschnitts 100 angeordnet ist.

Durch die beschriebene faltbare Anordnung sowohl des zweiten Trägerrahmenabschnitts 200 relativ zum ersten Trägerrahmenabschnitts 100 als auch ihrer unteren und oberen Ablagen 110, 208, 112, 210 ist es möglich, den Lastentransportwagen 1 auf eine kompakte und gut handhabbare Größe zusammenzufalten. Dies erlaubt einen einfacheren Transport und ein platzsparendes Verstauen des Lastentransportwagens 1. Beispielsweise kann der zusammengefaltete Lastentransportwagen 1 selbst wie ein Koffer von einer Bedienperson mit einer Hand getragen werden.

Im dargestellten Ausführungsbeispiel hat der Lastentransportwagen 1 in seinem auseinandergefalteten Gebrauchszustand eine Gesamtlänge von etwa 1110 mm (gemessen in Längsrichtung L1, L2), eine Breite von etwa 693 mm (gemessen senkrecht zu den Erstreckungsebenen E1, E2) und eine Weite von etwa 664 mm (gemessen in Richtung der Trägerrahmenschwenkachse X). Im zusammengefalteten Zustand hat der Lastentransportwagen 1 eine Länge von etwa 725 mm (gemessen in Längsrichtung L1), eine Breite von etwa 201 mm (gemessen senkrecht zur Erstreckungsebene E1) und eine Weite von etwa 520 mm (gemessen in Richtung der Trägerrahmenschwenkachse X).

Die klappbare Ausgestaltung der Ablagen 110, 112, 208, 210 des Trägerrahmens 10 ermöglicht ein besonders flexibles Beladen des Lastentransportwagens 1 beispielsweise mit Werkzeugkoffern WK (Fig. 5). Je nachdem, welche der Ablagen 110, 112, 208, 210 ausgeklappt oder eingeklappt sind, können größere oder kleinere Werkzeugkoffer WK oder andere Lasten auf dem Lastentransportwagen 1 transportiert werden. Beispielsweise kann der Lastentransportwagen 1 in der in Fig. 4C dargestellten Anordnung der Ablagen 110, 112, 208, 210 eine besonders große Last auf der unteren Ablage 110 des ersten Trägerrahmenabschnitts 100 aufnehmen.

Die unter und obere Ablage 110, 112 des ersten Trägerrahmenabschnitts 100 und die untere Ablage 208 des zweiten Trägerrahmenabschnitts 200 sind als ebene Platten ausgebildet. Wie in Fig. 5 dargestellt, können auf diese drei Ablagen 110, 112, 208 beispielsweise Werkzeugkoffer WK liegend aufeinandergestapelt und stehend nebeneinander platziert werden. Auf den Oberseiten 110b, 112b, 208b der Ablagen 110, 112, 208 ist ein rutschhemmender Belag 20 aufgebracht.

Die Breite der Auflageflächen, d.h. der effektiv nutzbaren Fläche der Oberseiten 110b, 112b der unteren und oberen Ablage 110, 112 beträgt etwa 368 mm (gemessen jeweils senkrecht zur Erstreckungsebene E1) und die der unteren Ablage 208 beträgt etwa 343 mm (gemessen senkrecht zur Erstreckungsebene E2). Die Weite der Auflageflächen der Ablage 110, 112, 208 beträgt etwa 520 mm (gemessen in Richtung der Trägerrahmenschwenkachse X).

Zum Fixieren der Werkzeugkoffer WK auf den Ablagen 110, 112, 208 können Gurte GT zum Einsatz kommen (Fig. 1). Zum Anbringen von Gurten GT am Trägerrahmen 10 sind am ersten und zweiten Trägerrahmenabschnitt 100, 200 erste Kopplungsmittel 22 angeordnet, welche mit an einem Ende eines Gurtes vorgesehenen ersten Gegenkopplungsmitteln koppelbar sind. An den in der eingeklappten Position oberen Enden der Ablagen 110, 112, 208 des Trägerrahmens 10 sind zweite Kopplungsmittel 24 vorgesehen, welche mit zweiten Gegenkopplungsmitteln am anderen Ende des Gurtes GT lösbar verbunden werden können. Die Gurte GT können flexibel (z.B. aus Gummi) oder nicht flexibel (z.B. ausgestaltet als Spanngurte) sein.

Die obere Ablage 210 des zweiten Trägerrahmenabschnitts 200 unterscheidet sich strukturell von den anderen drei Ablagen 110, 112, 208 des Trägerrahmens 10. Die obere Ablage 210 des zweiten Trägerrahmenabschnitts 200 umfasst einen Stützrahmen 212, der zwei zueinander parallel verlaufende, mit dem zweiten Trägerrahmenabschnitt 200 gelenkig verbundene Führungsschienen 214, 216 aufweist. Der Stützrahmen 212 weist außerdem eine die beiden Führungsschienen 214, 216 an ihrer Unterseite 210a miteinander verbindende Querstrebe 222 auf. An den sich gegenüberliegenden Innenflächen der beiden Führungsschienen 214, 216 ist jeweils eine sich entlang der Längsrichtung der Führungsschienen 214, 216 erstreckende Führungsstruktur 218, 220 vorgesehen.

Ist ein Werkzeugkoffer WK, etwa entlang seiner Seitenflächen, mit zu den beiden Eingriffsstruktur 218, 220 der oberen Ablage 210 des zweiten Trägerrahmenabschnitts 200 komplementären Gegeneingriffsstrukturen versehen, so kann der Werkzeugkoffer WK liegend auf die ausgeklappte obere Ablage 210 geschoben werden (Fig. 5 und 6). Der Werkzeugkoffer WK wird dabei durch die Querstrebe 222 der oberen Ablage 210 und durch den Eingriff der Eingriffsstrukturen 218, 220 in die entsprechende Gegeneingriffsstruktur gehalten. Gurte, wie sie im Zusammenhang mit den anderen Ablagen 110, 112, 208 beschrieben wurden, sind bei der oberen Ablage 210 des zweiten Trägerrahmenabschnitts 200 nicht erforderlich. Dadurch erlaubt es die obere Ablage 210, den Werkzeugkoffer WK ohne Weiteres je nach Bedarf zu öffnen oder zu schließen (Fig. 6).

Um das Tragen des Lastentransportwagens 1 in seinem zusammengefalteten Zustand zu vereinfachen, ist an der Unterseite 112a der oberen Ablage 112 des ersten Trägerrahmenabschnitts 100 eine Griffanordnung 116 vorgesehen. Die Griffanordnung 116 ist derart angeordnet, dass in der eingeklappten Position der oberen und unteren Ablage 112, 110 des ersten Trägerrahmenabschnitts 100 die Griffanordnung 116 oberhalb des oberen Endes der unteren Ablage 110 liegt. Zudem ist die Griffanordnung 116 derart angeordnet, dass sie im zusammengefalteten Zustand des Lastentransportwagens 1 kurz unterhalb der Trägerrahmenschwenkachse X bzw. auf im Wesentlichen einer Höhe wie die obere Querstrebe 108 des ersten Trägerrahmenabschnitts 100 liegt. Die Griffanordnung 116 ragt nicht über das obere Ende der oberen Ablage 112 hervor und ist hintergreifbar ausgestaltet.

Wie in Fig. 7 zu erkennen, ist auf der Rückseite RS des zweiten Trägerrahmenabschnitts 200 eine Hakenvorrichtung 26 angeordnet, welche zwischen einer eingeklappten Position und einer ausgeklappten Position bewegbar ist. Die eingeklappte Position der Hackenvorrichtung 26 ist beispielsweise in Fig. 1 dargestellt. Die Hakenvorrichtung 26 kann zum Halten von Kabeln, Schläuchen oder dergleichen dienen.

Im Folgenden wird die Konstruktion der Räder 300 beschrieben, welche auch einen eigenständigen Aspekt der vorliegenden Erfindung darstellen kann. Da die Räder 300 identisch zueinander sind, wird nachfolgend nur auf eines der Räder 300 eingegangen.

Das Rad 300 umfasst einen kontinuierlichen, nicht-aufblasbaren bzw. nicht-pneumatischen Reifen 314 und eine Nabe 318, welche durch in gleichen Abständen angeordnete identische Speichen 320 miteinander verbunden sind. Der Reifen 314 hat eine profilierte Lauffläche 316. Der Reife 314, die Nabe 318 und die Speichen 320 sind integral miteinander ausgebildet. Das Rad 300 ist beispielsweise aus einem polymeren Material gebildet. Die Speichen 320 sind derart geformt, dass sie eine nachgiebige Abstützung liefern. Jede Speiche 320 weist ein der Nabe 318 näheres Ende 320a und ein dem Reifen 314 näheres Ende 320b auf und erstreckt sich in Längsrichtung entlang einer Erstreckungsfläche. Die Erstreckungsfläche einer Speiche 320 ist nicht gerade, sondern U-förmig oder umgekehrt U-förmig gekrümmt. Genauer weist jede Speiche 320 in Längsrichtung einen der Nabe 318 näheren Abschnitt 320c und einen dem Reifen 314 näheren Abschnitt 320e sowie einen zwischen diesen beiden Abschnitten 320c, 320e gelegenen mittleren Abschnitt 320d auf. Der der Nabe 318 nähere Abschnitt 320c und der dem Reifen 314 nähere Abschnitt 320e haben etwa die gleiche Länge und sind kürzer als der mittlere Abschnitt 320d (gemessen in Längsrichtung der Speiche 320). Ein Scharniergelenk 322b, 322c ist zwischen dem der Nabe 318 näheren Abschnitt 320c und dem mittleren Abschnitt 320d sowie zwischen dem Reifen 314 näheren Abschnitt 320e und dem mittleren Abschnitt 320d jeweils dadurch ausgebildet, dass die Querschnittsfläche der Speiche 320 (gemessen senkreckt zur Erstreckungsfläche der Speiche 320) im Bereich des Scharniergelenks 322b, 322c kleiner ist als außerhalb dieses Bereichs. Ein solches Scharnier wird auch als Filmscharnier bezeichnet. Im Verbindungsbereich zwischen Reifen 314 und Speiche 320 sowie zwischen Nabe 318 und Speiche 320 ist jeweils eine zur Speiche 320 hinweisende Erhebung 324 an der Nabe 318 bzw. Erhebung 328 am Reifen ausgebildet, an welche die Speiche 320 wieder durch ein Filmscharnier 322a, 322d angelenkt ist.

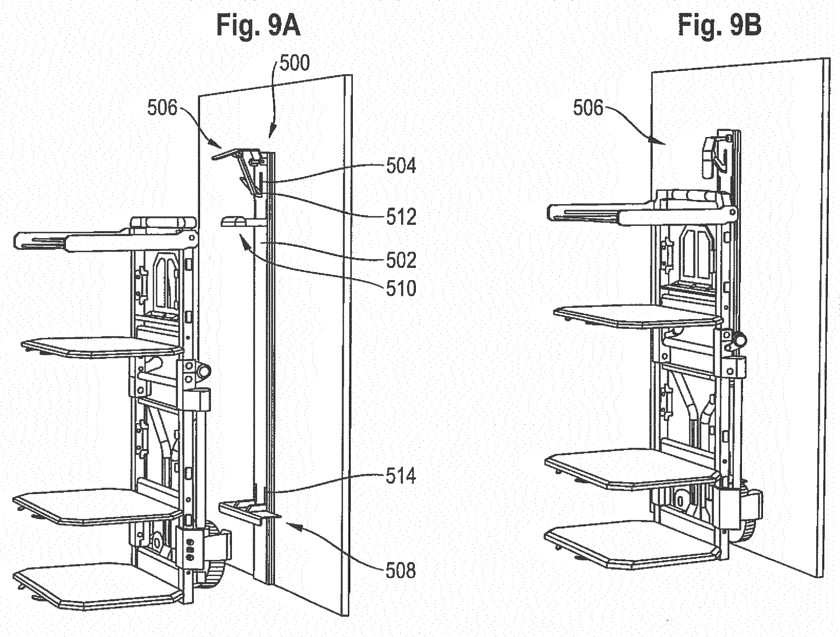

Der auseinandergefaltete Lastentransportwagen 1 eignet sich auch zur Verwendung als Regalsystem. Wie in Fig. 9A und 9B dargestellt, wird der Lastentransportwagen 1 dazu in seinem auseinandergefalteten Gebrauchszustand von einer an einer Wand fixierten Befestigungseinrichtung 500 gehalten. Die Befestigungseinrichtung 500 weist einen Balkenkörper 502 mit einem sich längs dem Balkenkörper 502 erstreckenden Führungskanal 504 auf. Eine am oberen Ende des Balkenkörpers 502 angeordnete Hebelanordnung 506 ist über in dem Führungskanal 504 verlaufende Verbindungsmittel 512 mit zwei Haltebügeln 508, 510 gekoppelt. Einer der Haltebügel 508 befindet sich am unteren Ende des Balkenkörpers, während der andere Haltebügel 510 am oberen Ende des Balkenkörpers 502 unterhalb der Hebelanordnung 506 angeordnet ist. Durch Betätigen der Hebelanordnung 506 sind die Haltebügel 508, 510 entlang des Balkenkörpers 502 in Führungsnuten 514 verfahrbar.

Die Hebelanordnung 506 ist zwischen einem gelösten Zustand (Fig. 9A) und einem gespannten Zustand (Fig. 9B) beweglich. Durch Überführen der Hebelanordnung 506 aus dem gelösten in den gespannten Zustand bewegen sich die Haltebügel 508, 510 entlang dem Balkenkörper 502 nach unten. Durch die Abwärtsbewegung der Haltebügel 508, 510 kann ein Lastentransportwagen 1 an der Befestigungseinrichtung 500 fixiert werden. Der obere Haltebügel 510 ist im dargestellten Ausführungsbeispiel dazu eingerichtet, mit der oberen Querstange 206 des zweiten Trägerrahmenabschnitts 200 in Eingriff zu kommen. Hingegen ist der untere Haltebügel 508 dazu eingerichtet, die Räder 300 der ihrem eingeklappten Zustand befindlichen Radaufhängung 302 von oben teilweise zu umgreifen.

### Bezugszeichenliste

- 1: Lastentransportwagen
- g: Schwerkraftrichtung
- 10: Trägerrahmen
- 100: Erster Trägerrahmenabschnitt
- 200: Zweiter Trägerrahmenabschnitt
- E1: Erste Erstreckungsebene des ersten Trägerrahmenabschnitts
- E2: Zweite Erstreckungsebene des zweiten Trägerrahmenabschnitts
- L1: Erste Längsrichtung des ersten Trägerrahmenabschnitts
- L2: Zweite Längsrichtung des zweiten Trägerrahmenabschnitts
- 100b, 100a: oberes und unteres Ende des ersten Trägerrahmenabschnitts
- 200b, 200a: oberes und unteres Ende des zweiten Trägerrahmenabschnitts
- VS: Vorderseite des Trägerrahmens
- RS: Rückseite des Trägerrahmens
- 300: Räder
- 102, 104: erste und zweite Längsstreben des ersten Trägerrahmenabschnitts
- 202, 204: erste und zweite Längsstreben des zweiten Trägerrahmenabschnitts
- 106, 108: untere und obere Querstrebe des ersten Trägerrahmenabschnitts
- 206: obere Querstrebe des zweiten Trägerrahmenabschnitts
- 12, 14: erste und zweite Gelenkverbindung
- X: Trägerrahmenschwenkachse
- L: gemeinsame Längsrichtung
- 110, 112: untere und obere Ablage des ersten Trägerrahmenabschnitts
- 208, 210: untere und obere Ablage des zweiten Trägerrahmenabschnitts
- A1, A2, A3, A4: Schwenkachsen der Ablagen
- 110a, 112a, 208a, 210a: Unterseiten der Ablagen
- 110b, 112b, 208b, 210b: Oberseiten der Ablagen
- 302: Radaufhängungen
- 304, 306: erste und zweite Stange der Radaufhängung
- 304b, 304a: oberen und unteres Ende der ersten Stange
- 16, 18: Erstes und Zweites Drehlager
- S: Radaufhängungsschwenkachsen
- 306b, 306a: oberen und unteres Ende der zweiten Stange
- 308, 310: ersten und zweiter Stützarm
- 306c, 306d, 306e: oberer, mittlerer, unteren Stangenabschnitt der zweiten Stange
- 312: Gleitschiene
- WK: Werkzeugkoffer
- 20: Rutschhemmender Belag
- GT: Gurt
- 22: erste Kopplungsmittel am Trägerrahmen
- 24: zweite Kopplungsmittel an den Ablagen
- 114: Stützvorrichtung
- α: Neigungswinkel des Trägerrahmens
- 212: Stützrahmen
- 214, 216: Führungsschienen
- 218, 220: Eingriffsstrukturen
- 222: Querstrebe
- 116: Griffanordnung
- 314: Reifen
- 316: Lauffläche
- 318: Nabe
- 320: Speiche
- 322a, 322b, 322c, 322d: Scharniergelenke
- 320a: das der Nabe nähere Ende einer Speiche
- 320b: das dem Reifen nähere Ende einer Speiche
- 320c, 320d, 320e: Speichenabschnitte
- 324: Erhebung an der Nabe
- 326: Erhebung am Reifen
- 26: Hakenvorrichtung
- 500: Befestigungseinrichtung
- 502: Balkenkörper
- 504: Führungskanal
- 506: Hebelanordnung
- 508, 510: unterer und oberer Haltebügel
- 512: Verbindungsmittel
- 514: Führungsnuten

## Patentansprüche

1. Lastentransportwagen (1) zum Transportieren von Lasten, vorzugsweise Werkzeugkoffern (WK), umfassend:
einen Trägerrahmen (10) mit einer Vorderseite (VS) und einer Rückseite (RS), welcher einen ersten und zweiten Trägerrahmenabschnitt (100, 200) aufweist, wobei sich der erste Trägerrahmenabschnitt (100) in einer ersten Erstreckungsebene (E1) und der zweite Trägerrahmenabschnitt (200) in einer zweiten Erstreckungsebene (E2) erstreckt,
wenigstens zwei an der Rückseite (RS) des ersten Trägerrahmenabschnitts (100) angeordnete Räder (300) zum Verfahren des Lastentransportwagens (1), und
wenigstens eine erste Ablage (112), welche an der Vorderseite (VS) des ersten Trägerrahmenabschnitts (100) angeordnet ist,
**dadurch gekennzeichnet, dass** der Lastentransportwagen (1) ferner wenigstens eine zweite Ablage (208) umfasst, welche an der Vorderseite (VS) des zweiten Trägerrahmenabschnitts (200) angeordnet ist,
wobei der zweite Trägerrahmenabschnitt (200) relativ zum ersten Trägerrahmenabschnitt (100) zwischen einer zusammengefalteten Position und einer auseinandergefalteten Position um eine im Wesentlichen horizontal verlaufende, zwischen dem ersten und zweiten Trägerrahmenabschnitt (100, 200) angeordnete Trägerrahmenschwenkachse (X) schwenkbar ist,
wobei der zweite Trägerrahmenabschnitt (200) in seiner auseinandergefalteten Position in Schwerkraftrichtung (g) oberhalb des ersten Trägerrahmenabschnitts (100) liegt und in der zusammengefalteten Position des zweiten Trägerrahmenabschnitts (200) die zweite Erstreckungsebene (E2) des zweiten Trägerrahmenabschnitts (200) im Wesentlichen parallel zur ersten Erstreckungsebene (E1) des ersten Trägerrahmenabschnitts (100) und die Rückseite (RS) des zweiten Trägerrahmenabschnitts (100) gegenüber der Rückseite (RS) des ersten Trägerrahmenabschnitts (100) angeordnet ist,
wobei die erste und zweite Ablage (112, 208) zwischen einer eingeklappten Position und einer ausgeklappten Position schwenkbar sind,
wobei die erste und zweite Ablage (112, 208) in ihrer ausgeklappten Position dazu vorgesehen sind, auf ihren nach oben weisenden Seiten (112a, 208a, 112b, 208b) zu transportierende Lasten (WK) aufzunehmen, und
wobei die erste Ablage (112) in ihrer eingeklappten Position im Wesentlichen parallel zur ersten Erstreckungsebene (E1) des ersten Trägerrahmenabschnitts (100) und die zweite Ablage (208) in ihrer eingeklappten Position im Wesentlichen parallel zur zweiten Erstreckungsebene (E2) des zweiten Trägerrahmenabschnitts (200) angeordnet ist.

2. Lastentransportwagen (1) nach Anspruch 1,
**dadurch gekennzeichnet, dass** der erste Trägerrahmenabschnitt (100) an seiner Vorderseite (VS) eine dritte Ablage (110) aufweist, welche in Schwerkraftrichtung (g) unterhalb der ersten Ablage (112) angeordnet ist und zwischen einer eingeklappten Position und einer ausgeklappten Position schwenkbar ist, wobei die erste und dritte Ablage (110, 112) in ihrer eingeklappten Position derart angeordnet sind, dass die dritte Ablage (110) an der ersten Ablage (112) wenigstens teilweise anliegt.

3. Lastentransportwagen (1) nach Anspruch 1 oder 2,
**dadurch gekennzeichnet, dass** die erste, zweite oder/und ggf. dritte Ablage (112, 208, 110) entgegen der Schwerkraftrichtung (g) von der ausgeklappten Position in die eingeklappte Position schwenkbar sind.

4. Lastentransportwagen (1) nach einem der vorhergehenden Ansprüche,
**dadurch gekennzeichnet, dass** der zweite Trägerrahmenabschnitt (200) in seiner auseinandergefalteten Position an seinem in Schwerkraftrichtung (g) oberen Ende eine vierte Ablage (210) aufweist, welche zwischen einer eingeklappten Position und einer ausgeklappten Position schwenkbar ist, wobei der überstrichene Schwenkwinkel zwischen der ausgeklappten Position und der eingeklappten Position größer als 180° ist.

5. Lastentransportwagen (1) nach einem der vorhergehenden Ansprüche,
**dadurch gekennzeichnet, dass** die erste, zweite, ggf. dritte oder/und ggf. vierte Ablage (112, 208, 110, 210) unabhängig voneinander zwischen einer eingeklappten Position und einer ausgeklappten Position schwenkbar sind.

6. Lastentransportwagen (1) nach einem der vorhergehenden Ansprüche,
**dadurch gekennzeichnet, dass** die erste, zweite, ggf. dritte und ggf. vierte Ablage (112, 208, 110, 210) eine ebene Auflagefläche zum Ablegen einer Last oder einen Stützrahmen (114) zum Einhängen einer Last (WK) aufweisen.

7. Lastentransportwagen (1) nach einem der vorhergehenden Ansprüche,
**dadurch gekennzeichnet, dass** die Räder (300) jeweils an einer Radaufhängung (302) um eine Radachse (R) drehbar gelagert sind, wobei die Radaufhängungen (302) jeweils um eine senkrecht zur Trägerrahmenschwenkachse (X) angeordnete Radaufhängungsschwenkachse (S) zwischen einer eingeklappten Position und einer ausgeklappten Position schwenkbar sind, wobei die Radachsen (R) der Räder (300) in der eingeklappten Position der Radaufhängungen (302) jeweils senkrecht zur ersten Erstreckungsebene (E1) des ersten Trägerrahmenabschnitts (100) und in der ausgeklappten Position der Radaufhängung (302) parallel zur ersten Erstreckungsebene (E1) des ersten Trägerrahmenabschnitts (100) angeordnet sind.

8. Lastentransportwagen (1) nach Anspruch 7,
**dadurch gekennzeichnet, dass** die Radaufhängungen (302) jeweils eine Gleitschiene (312) umfassen, welche in einem Abstand zum ersten Trägerrahmenabschnitt (100) und im Wesentlichen parallel zur Längsrichtung (L1) des ersten Trägerrahmenabschnitts (100) verläuft.

9. Lastentransportwagen (1) nach Anspruch 8,
**dadurch gekennzeichnet, dass** die Gleitschienen (312) zusammen mit den Radaufhängungen (302) zwischen der eingeklappten Position und der ausgeklappten Position der Radaufhängungen (302) um die Radaufhängungsschwenkachse (S) schwenkbar sind.

10. Lastentransportwagen (1) nach einem der vorhergehenden Ansprüche,
**dadurch gekennzeichnet, dass** die Räder (300) jeweils einen elastischen Reifen (314), bevorzugt einen nicht-aufblasbaren Reifen (314), und eine Mehrzahl von Speichen (320) aufweisen, wobei die Speichen (320) dazu ausgebildet sind, eine Verformung des Reifens (314) abzufedern.

11. Lastentransportwagen (1) nach einem der vorhergehenden Ansprüche,
**dadurch gekennzeichnet, dass** an der in der ausgeklappten Position in Schwerkraftrichtung (g) nach unten weisenden Seite (112a) der ersten Ablage (112) eine Griffanordnung (116) derart angeordnet ist, dass der Lastentransportwagen (1) im zusammengefalteten Zustand von einer Bedienperson an der Griffanordnung (116) tragbar ist.

12. Lastentransportwagen (1) nach einem der vorhergehenden Ansprüche,
**dadurch gekennzeichnet, dass** der erste und zweite Trägerrahmenabschnitt (100, 200) erste Kopplungsmittel (22) aufweisen, welche mit ersten Gegenkopplungsmitteln (GM1) eines am Lastentransportwagen (1) anzubringenden Gurtes (GT) koppelbar sind.

13. Lastentransportwagen (1) nach einem der vorhergehenden Ansprüche,
**dadurch gekennzeichnet, dass** die erste, zweite oder/und ggf. dritte Ablage (112, 208, 110) in der eingeklappten Position an ihrem in Schwerkraftrichtung (g) oberen Ende zweite Kopplungsmittel (24) aufweisen, welche mit zweiten Gegenkopplungsmitteln eines an dem Lastentransportwagen (1) anzubringenden Gurtes (GT) koppelbar sind.

14. Verwendung eines Lastentransportwagens (1) nach einem der vorhergehenden Ansprüche als Regalsystem,
**dadurch gekennzeichnet, dass** der Lastentransportwagen (1) mittels wenigstens einer an einer Wand angeordneten verstellbaren Befestigungseinrichtung (500) an der Wand befestigt wird.
